# EUROPÄISCHE PATENTANMELDUNG

(11) **EP 4 378 899 A1**
(43) Veröffentlichungstag der Anmeldung: **05.06.2024**
(21) Anmeldenummer: 23206684.5
(22) Anmeldetag: 30.10.2023
(51) Int. Cl.: C02F 1/44, B01D 61/14, B01D 61/18, B01D 61/20, B01D 61/22, B01D 63/06, B01D 69/04, B01D 71/02, C02F 1/00

(54) **REINIGUNGSEINHEIT UND VERFAHREN ZUR AUFBEREITUNG VON UNFILTRAT**

(30) Priorität: 30.11.2022 DE 102022131787
(71) Anmelder: S E T System Engineering Technology GmbH, 35683 Dillenburg (DE)
(72) Erfinder: DORN, Gerhard, 35708 Haiger (DE); STETTER, Matthias, 73728 Esslingen (DE)
(74) Vertreter: advotec.

(57) **Zusammenfassung**

Die Erfindung betrifft eine Reinigungseinheit (10) und ein Verfahren zur Aufbereitung von Unfiltrat (12), Abwasser, Schmutzwasser, Reinigungsflüssigkeit, Schmutzlauge oder dergleichen, wobei die Reinigungseinheit eine Membranfiltervorrichtung (11) zur Tangentialflussfiltration von Unfiltrat aufweist, wobei die Membranfiltervorrichtung einen Flüssigkeitskreislauf (13), eine Pumpe (14) und zumindest einen Membranfilter (15) umfasst, wobei die Pumpe und der Membranfilter in dem Flüssigkeitskreislauf angeordnet sind, wobei die Pumpe an einem Filterzulauf (16) des Membranfilters angeschlossen ist, wobei mittels der Pumpe Unfiltrat in dem Flüssigkeitskreislauf förderbar und durch den Membranfilter leitbar ist, wobei der Membranfilter eine Filterableitung (17) aufweist, über die Filtrat aus dem Membranfilter leitbar ist, wobei die Membranfiltervorrichtung einen Flüssigkeitsbehälter (18) umfasst, der in dem Flüssigkeitskreislauf angeordnet ist, wobei mittels der Pumpe Unfiltrat aus dem Flüssigkeitsbehälter förderbar ist, wobei der Membranfilter mit einem Filterablauf (19) in den Flüssigkeitsbehälter mündet, derart, dass über den Filterablauf Unfiltrat in den Flüssigkeitsbehälter einleitbar ist.

## Beschreibung

Die Erfindung betrifft eine Reinigungseinheit und ein Verfahren zur Aufbereitung von Unfiltrat, Abwasser, Schmutzwasser, Reinigungsflüssigkeit, Schmutzlauge oder dergleichen, wobei die Reinigungseinheit eine Membranfiltervorrichtung zur Tangentialflussfiltration von Unfiltrat aufweist, wobei die Membranfiltervorrichtung einen Flüssigkeitskreislauf, eine Pumpe und zumindest einen Membranfilter umfasst, wobei die Pumpe und der Membranfilter in dem Flüssigkeitskreislauf angeordnet sind, wobei die Pumpe an einen Filterzulauf des Membranfilters angeschlossen ist, wobei mittels der Pumpe Unfiltrat in dem Flüssigkeitskreislauf förderbar und durch den Membranfilter leitbar ist, wobei der Membranfilter eine Filterableitung aufweist, über die Filtrat aus dem Membranfilter leitbar ist.

Derartige Reinigungseinheiten und Verfahren werden regelmäßig zur Reinigung von Unfiltrat, wie z. B. Abwässern eingesetzt, wobei unter Unfiltrat alle verunreinigten Flüssigkeiten bzw. verunreinigte flüssige Medien verstanden werden können. Regelmäßig werden Reinigungseinheiten in der Getränkeindustrie eingesetzt, beispielsweise zusammen mit einer Anlage zur Flaschenreinigung oder dergleichen. Bei der Flaschenreinigung kommt eine Lauge zum Einsatz, die mehrere aufeinanderfolgende Laugenbäder zur Flaschenreinigung durchläuft. Dadurch sind unter anderem verfaserte Etiketten, Farbpigmente, Bindemittelablagerungen oder dergleichen, in der Lauge enthalten. Um diese Schmutzlauge bzw. das Unfiltrat der Flaschenreinigungsanlage nicht in einen Kanal ablassen zu müssen, wird das Unfiltrat mit einer Reinigungseinheit durch Filtration soweit aufbereitet, dass es als Lauge in die Anlage zur Flaschenreinigung zurückgeführt werden kann.

Die Aufbereitung des Unfiltrats kann mittels einer Membranfiltervorrichtung zur Tangentialflussfiltration bzw. Cross-Flow-Filtration erfolgen. Dabei ist der Membranfilter zusammen mit einer Pumpe in einem Flüssigkeitskreislauf angeordnet, wobei die Pumpe das Unfiltrat unter einem vergleichsweise hohen Druck, beispielsweise > 4 bar, in den Membranfilter über einen Filterzulauf einleitet. Aus dem Membranfilter austretendes Filtrat kann dann als Lauge wiederverwendet werden. Das Unfiltrat fließt parallel entlang einer Filtermembran des Membranfilters, wobei ein Teil des Unfiltrats die Filtermembran quer zu einer Flussrichtung des Unfiltrats durchdringt und als Filtrat abgeleitet werden kann. Dabei lagern sich Feststoffe bzw. Partikel des Unfiltrats an der Filtermembran ab, wobei durch das parallele Anströmen der Filtermembran die sich ablagernden Feststoffe kontinuierlich von einem Strom des Unfiltrats zumindest teilweise mitgerissen werden. Über den Flüssigkeitskreislauf wird das Unfiltrat über die Pumpe wieder zu dem Membranfilter zurückgeführt. Um einen ausreichenden Flüssigkeitsdruck innerhalb des Membranfilters zu erzielen, wird an einem Filterablauf des Membranfilters mittels eines Ventils ein Volumenstrom des Unfiltrats gedrosselt. Eine derartige Reinigungseinheit ist beispielsweise aus der EP 2 016 992 B1 bekannt.

Nachteilig bei derartigen Reinigungseinheiten und Verfahren ist, dass der Membranfilter in regelmäßigen Zeitabständen gereinigt werden muss, da eine Ablagerung von Partikeln zu einem verminderten Durchsatz von Filtrat führt. Diese Reinigung bzw. Spülung des Membranfilters erfordert einen weiteren Membranfilter, der während der Reinigung zur Filterung von Unfiltrat nutzbar ist, damit ein Betrieb der Reinigungseinheit kontinuierlich aufrechterhalten werden kann. Hieraus ergibt sich ein vergleichsweise aufwändiger konstruktiver Aufbau der Reinigungseinheit und durch das Spülen des Membranfilters ein zusätzlicher Aufwand durch Personal sowie hohe Medienverluste durch häufiges Rückspülen einer Filtermembran des Membranfilters.

Der vorliegenden Erfindung liegt daher die Aufgabe zugrunde, eine Reinigungseinheit und ein Verfahren zur Aufbereitung von Unfiltrat vorzuschlagen, mit der bzw. dem ein kostengünstiger Betrieb möglich ist.

Diese Aufgabe wird durch eine Reinigungseinheit mit den Merkmalen des Anspruchs 1 und ein Verfahren mit den Merkmalen des Anspruchs 13 gelöst.

Die erfindungsgemäße Reinigungseinheit zur Aufbereitung von Unfiltrat, Abwasser, Schmutzwasser, Reinigungsflüssigkeit, Schmutzlauge oder dergleichen, weist eine Membranfiltervorrichtung zur Tangentialflussfiltration von Unfiltrat auf, wobei die Membranfiltervorrichtung einen Flüssigkeitskreislauf, eine Pumpe und zumindest einen Membranfilter umfasst, wobei die Pumpe und der Membranfilter in dem Flüssigkeitskreislauf angeordnet sind, wobei die Pumpe an einem Filterzulauf des Membranfilters angeschlossen ist, wobei mittels der Pumpe Unfiltrat in dem Flüssigkeitskreislauf förderbar und durch den Membranfilter leitbar ist, wobei der Membranfilter eine Filterableitung aufweist, über die Filtrat aus dem Membranfilter leitbar ist, wobei die Membranfiltervorrichtung einen Flüssigkeitsbehälter umfasst, der in dem Flüssigkeitskreislauf angeordnet ist, wobei mittels der Pumpe Unfiltrat aus dem Flüssigkeitsbehälter förderbar ist, wobei der Membranfilter mit einem Filterablauf in den Flüssigkeitsbehälter mündet, derart, dass über den Filterablauf Unfiltrat in den Flüssigkeitsbehälter einleitbar ist.

Die erfindungsgemäße Reinigungseinheit kann prinzipiell zur Aufbereitung jeder Art von Unfiltrat bzw. Abwasser dienen, beispielsweise Unfiltrat einer Flaschenreinigungsanlage, einer Umkehrosmoseanlage oder einer anderen industriellen Anlage. Das Unfiltrat kann Abwasser, Schmutzwasser, Reinigungsflüssigkeit, Schmutzlauge oder eine Suspension bzw. ein Gemisch daraus sein. Wesentlich ist, dass die Reinigungseinheit zur Filtration des Unfiltrats bzw. der verschmutzten Flüssigkeit dient. Die Membranfiltervorrichtung der Reinigungseinheit ist zur Tangentialflussfiltration (Cross-Flow-Filtration) ausgebildet, bei der das Unfiltrat durch einen Membranfilter der Membranfiltervorrichtung hindurchgeleitet wird. Ein Teil des Unfiltrats durchdringt quer zu einer Fließrichtung des Unfiltrats eine Filtermembran des Membranfilters und gelangt als Filtrat aus dem Membranfilter heraus. Der Membranfilter ist mit einer Filterableitung ausgebildet, über die das Filtrat ausgeleitet werden kann. Die Filterableitung kann als ein Leitungsanschluss, Rohrstück oder eine andere Art einer Leitung ausgebildet sein. Die Membranfiltervorrichtung ist in einem Flüssigkeitskreislauf bzw. Abwasserkreislauf zusammen mit einer Pumpe angeordnet, wobei mittels der Pumpe das Unfiltrat zu dem Membranfilter gefördert wird. Mittels eines Flüssigkeitsbehälters, der ebenfalls in dem Flüssigkeitskreislauf angeordnet ist, kann das Unfiltrat in dem Flüssigkeitsbehälter bzw. Abwasserbehälter gesammelt bzw. zwischengespeichert werden. Der Flüssigkeitsbehälter kann, insofern Filtrat aus dem Membranfilter ausgeleitet wird, mit einer entsprechenden Menge Unfiltrat wieder aufgefüllt werden. Weiter kann der Flüssigkeitsbehälter dazu genutzt werden, auch konzentrierteres Unfiltrat zumindest teilweise oder vollständig abzulassen, wenn das Unfiltrat einen Verschmutzungsgrad erreicht hat, der nicht mehr wirtschaftlich sinnvoll mit der Membranfiltervorrichtung aufbereitbar ist.

Der Membranfilter verfügt über einen Filterablauf, der, vorzugsweise unmittelbar, in den Flüssigkeitsbehälter mündet. So kann über den Filterablauf das Unfiltrat in den Flüssigkeitsbehälter eingeleitet werden. Der Filterablauf ist dabei offen bzw. nicht mit einem Ventil oder dergleichen verschlossen, so dass das Unfiltrat im Wesentlichen drucklos bzw. bei einem sehr geringen Druck den Membranfilter durchströmen und in den Flüssigkeitsbehälter frei ausfließen kann.

Dadurch, dass das Unfiltrat aus dem Filterablauf des Membranfilters im Wesentlichen frei ausfließen kann und den Membranfilter drucklos bzw. mit einem sehr geringen Druck durchströmt, wird eine dauerhafte Anhaftung von in dem Unfiltrat befindlichen Partikeln an der Filtermembran des Membranfilters im Wesentlichen verhindert. Die Partikel werden dann durch den vergleichsweise hohen Volumenstrom des Unfiltrats in dem Membranfilter mitgeführt, wenn sie sich an der Filtermembran anlagern. Dadurch wird es möglich die Filtermembran im Gegensatz zu einer Druckbeaufschlagung der Filtermembran vergleichsweise durchlässig für Filtrat zu halten, so dass kontinuierlich Filtrat in einer im Wesentlichen gleichbleibenden Menge gewonnen werden kann, ohne dass in regelmäßigen Zeitabständen eine Spülung des Membranfilters erforderlich wäre. Dadurch wird es auch möglich, die Reinigungseinheit mit nur einem einzelnen Membranfilter auszustatten und unterbrechungsfrei in Betrieb zu halten. Weiter erübrigt sich durch die nicht mehr notwendigerweise durchzuführende Spülung des Membranfilters ein entsprechender Personaleinsatz, so dass die Reinigungseinheit insgesamt kostengünstig herstellbar ist und auch kostengünstig betrieben werden kann.

Ein Durchflussquerschnitt des Filterablaufs kann zumindest so groß wie ein Durchflussquerschnitt des Membranfilters ausgebildet sein. Somit kann sichergestellt werden, dass das Unfiltrat im Wesentlichen drucklos bzw. frei aus dem Membranfilter austreten kann. Prinzipiell kann jedoch auch vorgesehen sein, dass der Durchflussquerschnitt des Filterablaufs einstellbar ausgebildet ist. So ist es denkbar, dass der Durchflussquerschnitt des Filterablaufs gegenüber dem Durchflussquerschnitt des Membranfilters im Verhältnis vermindert werden kann. Es wird dann möglich einen vergleichsweise geringen Druck in dem Membranfilter auszubilden, wenn die aufzubereitenden Abwässer bzw. das Unfiltrat dies erfordern.

Der Filterablauf kann durch einen Ringspalt ausgebildet sein. Der Ringspalt kann an dem Filterablauf bzw. einem Ende des Membranfilters, an dem das Unfiltrat aus dem Membranfilter austritt, angeordnet sein. Der Ringspalt kann beispielsweise durch eine Platte an dem Ende des Membranfilters einfach ausgebildet werden. Ein Durchflussquerschnitt bzw. eine Breite des Ringspalts kann leicht durch eine Variation eines Abstands der Platte relativ zu dem Membranfilter eingestellt werden. Prinzipiell können jedoch auch andere Öffnungsquerschnitte als Filterablauf genutzt werden.

Der Filterablauf kann unterhalb eines Niveaus des Unfiltrats in dem Flüssigkeitsbehälter angeordnet sein. Das aus dem Filterablauf austretende Unfiltrat gelangt dann unmittelbar mit dem am Flüssigkeitsbehälter befindlichen Unfiltrat in Kontakt und vermischt sich mit diesem. Aufgrund des in dem Flüssigkeitsbehälter befindlichen Unfiltrats wird ein Austritt des Unfiltrats an dem Filterablauf soweit gedämpft, dass sich ein kontinuierlicher und gleichmäßiger Durchfluss von Unfiltrat durch den Membranfilter ergibt. Eine Bildung von Kavitäten oder unerwünschten Turbulenzen kann so vermieden werden. Der Membranfilter kann zu einem überwiegenden Teil oder auch vollständig unterhalb des Niveaus des Unfiltrats in dem Flüssigkeitsbehälter angeordnet sein.

In der Filterableitung kann ein Volumenstromsensor der Reinigungseinheit angeordnet sein, mittels dem ein Volumenstrom des Filtrats gemessen werden kann. Der Volumenstromsensor kann beispielsweise ein Durchflussmengenmesser, Schwebteilsensor oder dergleichen sein. Somit wird es möglich, eine Menge an gewonnenem Filtrat während eines Zeitabschnitts zu bestimmen.

Die Reinigungseinheit kann eine Regeleinrichtung umfassen, mittels der eine Förderleistung der Pumpe in Abhängigkeit eines Volumenstroms des Filtrats geregelt werden kann. Unter einer Förderleistung kann ein von der Pumpe bewirkter Volumenstrom oder eine Drehzahl der Pumpe verstanden werden. Wenn ein Volumenstrom des Filtrats bekannt ist, kann mittels der Regeleinrichtung dann die Förderleistung der Pumpe an den Volumenstrom angepasst werden. So wird es möglich, die Förderleistung der Pumpe, je nach Bedarf, zu steigern oder zu reduzieren. Durch diesen bedarfsgerechten Betrieb der Pumpe wird es möglich die Reinigungseinheit energiesparend zu betreiben, da ein Leistungsbedarf der Pumpe dann vergleichsweise gering ist. Bei den aus dem Stand der Technik bekannten Reinigungseinheiten ist es hingegen bekannt, Pumpen mit einer kontinuierlichen Förderleistung zu betreiben, sodass Unfiltrat stets mit einem hohen Druck in den Membranfilter eingeleitet wird.

Die Pumpe kann einen Frequenzumrichter aufweisen, der mittels der Regeleinrichtung angesteuert werden kann. Durch den Frequenzumrichter wird es insbesondere möglich, die Förderleistung der Pumpe an einen Bedarf anzupassen, beispielsweise eine Drehzahl der Pumpe zu regeln. Vorteilhaft kann so auch mittels des Frequenzumrichters Energie eingespart werden. Da derartige Reinigungseinheiten kontinuierlich betrieben werden, kann über einen längeren Zeitraum eine sehr große Energieeinsparung erzielt werden.

Der Membranfilter kann mit zumindest einer keramischen Membranfilterkerze ausgebildet sein. Alternativ kann der Membranfilter mehrere keramische Membranfilterkerzen aufweisen, die in Bezug auf eine Strömungsrichtung des Unfiltrats in Reihe oder parallel geschaltet sind. Darüber hinaus kann die Reinigungseinheit eine Mehrzahl von Membranfiltern aufweisen, die jeweils zumindest eine oder mehrere keramische Membranfilterkerzen aufweisen.

Der Membranfilter kann zur Filterung von Partikeln mit einer Größe von < 100 µm ausgebildet sein. Beispielsweise können Partikel < 5 µm, < 0,05 µm oder bis zu 0,0001 µm oder kleiner, mittels des Membranfilters abgeschieden werden. Das Filtrat ist dann frei von Partikeln dieser Größe oder größer.

Die Reinigungseinheit kann eine Schwingsiebvorrichtung zur Vorreinigung von Unfiltrat umfassen, welche in einer Behälterzuleitung des Flüssigkeitsbehälters angeordnet sein kann. Über die Behälterzuleitung kann bereits vorfiltriertes Unfiltrat der Schwingsiebvorrichtung zugeführt werden. Mittels der Schwingsiebvorrichtung können beispielsweise größere Partikel, Fasern von Etiketten oder dergleichen aus dem vorfiltrierten Unfiltrat abgeschieden werden. Die Schwingsiebvorrichtung kann zur Filterung von Partikeln mit einer Größe von > 25 µm, > 50 µm oder > 100 µm ausgebildet sein. So wird es möglich vor einer Einleitung des Unfiltrats in den Flüssigkeitskreislauf bzw. in den Flüssigkeitsbehälter das Unfiltrat von Partikeln diese Größe und Art zu befreien, so dass die Membranfiltervorrichtung effektiver betrieben werden kann.

Der Flüssigkeitsbehälter kann zumindest einen Sumpf mit zumindest einem Behälterablauf ausbilden. Der Flüssigkeitsbehälter kann darüber hinaus einen weiteren Sumpf mit zumindest einem weiteren Behälterablauf ausbilden. Das in den Flüssigkeitsbehälter eingeleitete Unfiltrat kann den Flüssigkeitsbehälter vergleichsweise langsam durchströmen, derart, dass sich vergleichsweise schwere Partikel an einem Boden des Sumpfs absetzten können, an dem auch der Behälterablauf angeordnet sein kann. Durch eine Aufkonzentration von Unfiltrat in dem Flüssigkeitskreislauf kann sich dann in dem Sumpf eine Sedimentschicht ausbilden, die über den Behälterablauf aus dem Flüssigkeitsbehälter bei Bedarf ausgeleitet werden kann. Sofern das Unfiltrat soweit mit der Membranfiltervorrichtung aufkonzentriert ist, dass eine wirtschaftlich sinnvolle Aufbereitung des Unfiltrats nicht mehr möglich ist, kann über den Behälterablauf die Reinigungseinheit bzw. der Flüssigkeitskreislauf vollständig entleert werden.

Bei dem erfindungsgemäßen Verfahren zur Aufbereitung von Unfiltrat, Abwasser, Schmutzwasser, Reinigungsflüssigkeit, Schmutzlauge oder dergleichen, mit einer Reinigungseinheit, wird mit einer Membranfiltervorrichtung der Reinigungseinheit eine Tangentialflussfiltration von Unfiltrat durchgeführt, wobei die Membranfiltervorrichtung einen Flüssigkeitskreislauf, eine Pumpe und zumindest einen Membranfilter umfasst, wobei die Pumpe und der Membranfilter in dem Flüssigkeitskreislauf angeordnet sind, wobei die Pumpe an einen Filterzulauf des Membranfilters angeschlossen ist, wobei mittels der Pumpe Unfiltrat in dem Flüssigkeitskreislauf gefördert und durch den Membranfilter geleitet wird, wobei der Membranfilter eine Filterableitung aufweist, über die Filtrat aus dem Membranfilter geleitet wird, wobei die Membranfiltervorrichtung einen Flüssigkeitsbehälter umfasst, der in dem Flüssigkeitskreislauf angeordnet ist, wobei mittels der Pumpe Unfiltrat aus dem Flüssigkeitsbehälter gefördert wird, wobei der Membranfilter mit einem Filterablauf in den Flüssigkeitsbehälter mündet, wobei über den Filterablauf Unfiltrat in den Flüssigkeitsbehälter eingeleitet wird. Zu den Vorteilen des erfindungsgemäßen Verfahrens wird auf die Vorteilsbeschreibung der erfindungsgemäßen Reinigungseinheit verweisen.

Mittels der Pumpe kann Unfiltrat aus dem Flüssigkeitsbehälter angesaugt und an dem Filterzulauf ein Druck von < 4 bar, bevorzugt ≤ 2 bar, besonders bevorzugt von ≤ 1 bar, ausgebildet werden. Unter dem Druck wird hier ein Druck des Unfiltrats innerhalb des Membranfilters bzw. an dem Filterzulauf über einem Umgebungsdruck verstanden.

Dadurch, dass ein derart geringer Druck mittels der Pumpe ausgebildet wird, wird es möglich ein Absetzen von Partikeln an einer Filtermembran des Membranfilters und damit ein Verstopfen der Filtermembran zu vermeiden. Gleichzeitig kann dadurch, dass die Pumpe nur einen geringen Druck erzeugen muss, eine Pumpendrehzahl reduziert und damit Energie eingespart werden.

Mittels der Pumpe kann zwischen dem Filterzulauf und dem Filterablauf eine Druckdifferenz von ≤ 1 bar ausgebildet werden. Beispielsweise kann an dem Filterzulauf ein Druck von 1 bar und an dem Filterablauf ein Druck von 0,3 bar ausgebildet werden. Die Druckdifferenz ergibt sich dann über das aus dem Membranfilter frei austretende Filtrat und einem Strömungswiderstand des Membranfilters. Wesentlich ist, dass der Druck an dem Filterablauf noch so groß ist, dass Unfiltrat aus dem Membranfilter herausfließen kann. Eine Druckdifferenz zu einem Umgebungsdruck kann dabei jedoch so gering sein, dass von einer im Wesentlichen drucklosen Einleitung von Unfiltrat in den Flüssigkeitsbehälter ausgegangen werden kann.

Eine Regeleinrichtung einer Steuervorrichtung der Reinigungseinheit kann eine Förderleistung der Pumpe nach einem Volumenstrom des Filtrats regeln. Wie zur Reinigungseinheit bereits ausgeführt, kann ein von der Pumpe bewirkter Volumenstrom bzw. eine Drehzahl der Pumpe dann einem Bedarf eines Volumenstroms an Filtrat angepasst werden. Eine Reduzierung der Förderleistung der Pumpe an einen tatsächlichen Bedarf kann eine wesentliche Energieeinsparung bewirken.

Die Steuervorrichtung der Regeleinrichtung kann den Volumenstrom des Filtrats als eine Führungsgröße vorgeben. Somit wird es möglich, in der Steuervorrichtung beispielsweise einen gewünschten Volumenstrom an Filtrat zu speichern, beispielsweise 1000 Liter pro Stunde. Die Regeleinrichtung kann dann die Förderleistung der Pumpe soweit anpassen, bis der gewünschte Volumenstrom des Filtrats erreicht ist. Dadurch kann verhindert werden, dass die Pumpe unnötig betrieben wird.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig.** 1: eine schematische Prinzipdarstellung einer ersten Ausführungsform einer Reinigungseinheit;
- Fig. 2: eine perspektivische Teilschnittansicht eines Membranfilters;
- Fig. 3: eine Seitenansicht einer zweiten Ausführungsform einer Reinigungseinheit;
- Fig. 4: eine schematische Prinzipdarstellung einer dritten Ausführungsform einer Reinigungseinheit.

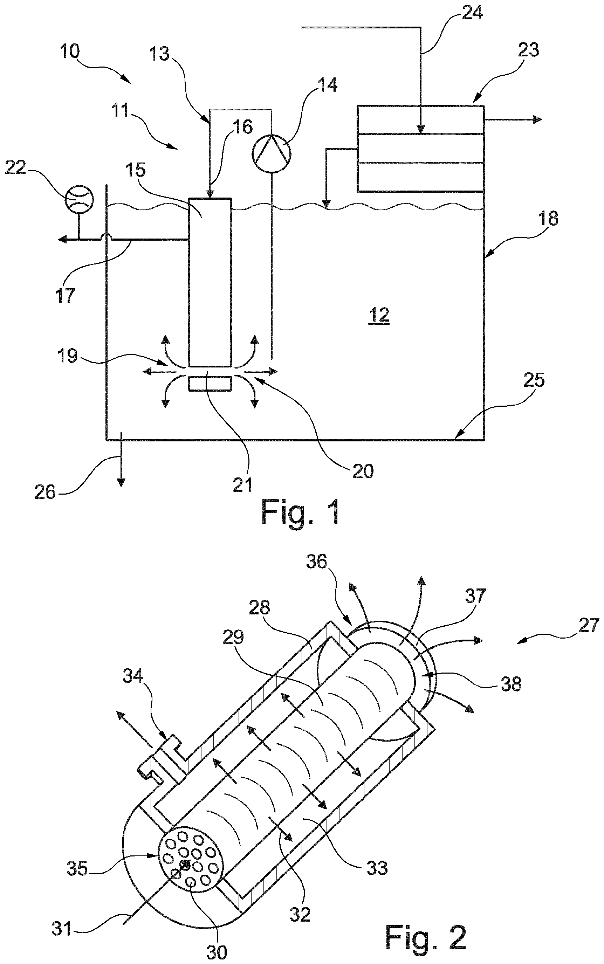

Die **Fig. 1** zeigt eine schematische Darstellung einer Reinigungseinheit 10 zur Aufbereitung von Unfiltrat oder dergleichen, mit einer Membranfiltervorrichtung 11 zur Tangentialflussfiltration von Unfiltrat 12. Die Membranfiltervorrichtung 11 umfasst einen Flüssigkeitskreislauf 13, eine Pumpe 14 und einen Membranfilter 15. Die Pumpe 14 ist dabei an einen Filterzulauf 16 des Membranfilters 15 angeschlossen, wobei mittels der Pumpe 14 Unfiltrat 12 in dem Flüssigkeitskreislauf 13 gefördert und durch den Membranfilter 15 geleitet wird. Der Membranfilter 15 weist weiter eine Filterableitung 17 auf, über die Filtrat aus dem Membranfilter 15 ausgeleitet werden kann. Ein Flüssigkeitsbehälter 18 der Membranfilteranordnung 11 ist ebenfalls in dem Flüssigkeitskreislauf 13 angeordnet, wobei mittels der Pumpe 14 Unfiltrat 12 aus dem Flüssigkeitsbehälter 18 in den Flüssigkeitskreislauf 13 gefördert werden kann. Der Membranfilter 15 ist weiter mit einem Filterablauf 19 ausgebildet, der in den Flüssigkeitsbehälter 18 derart mündet, dass über den Filterablauf 19 Unfiltrat 12 in den Flüssigkeitsbehälter 18 eingeleitet werden kann. Insbesondere ist an einem unteren Ende 20 des Membranfilters 15 ein Ringspalt 21 ausgebildet, über den das Unfiltrat 12 in den Flüssigkeitsbehälter 18 bzw. das darin bereits befindliche Unfiltrat 12, im Wesentlichen drucklos einströmen kann.

Weiter ist die Reinigungseinheit 10 mit einer hier nicht dargestellten Regeleinrichtung ausgebildet, die eine Förderleistung der Pumpe 14 nach einem Volumenstrom des Filtrats regeln kann. Hierzu ist in der Filterableitung 17 ein Volumenstromsensor 22 zur Messung eines Volumenstroms des Filtrats vorgesehen. Weiter umfasst die Reinigungseinheit 10 eine Schwingsiebvorrichtung 23 zur Vorreinigung von Unfiltrat welches über eine Behälterzuleitung 24 in den Flüssigkeitsbehälter 18 eingeleitet werden kann. Hier können bereits Partikel aus dem Unfiltrat 12 mit einer Größe von > 100 µm abgeschieden werden. Der Flüssigkeitsbehälter 18 weist weiter im Bereich eines Bodens 25 einen Behälterablauf 26 auf, über den mit Partikeln aufkonzentriertes Unfiltrat 12 bei Bedarf abgelassen werden kann.

Die Fig. 2 zeigt eine perspektivische Teilschnittansicht eines hier schematisch dargestellten Membranfilters 27, wie er in einer Reinigungseinheit gemäß den Fig. 1, 3 oder 4 Verwendung finden kann. Der Membranfilter 27 weist ein Gehäuse 28 auf, innerhalb dem eine Membranfilterkerze 29 angeordnet ist. Die Membranfilterkerze 29 besteht aus einem porösen keramischen Material und weist Kanäle 30 auf, die in einer Längsrichtung der Membranfilterkerze 29 verlaufen und ein Durchströmen einer zu reinigenden Flüssigkeit bzw. von Unfiltrat in der mit einem Pfeil 31 gekennzeichneten Strömungsrichtung ermöglichen. Dabei tritt die Flüssigkeit teilweise durch eine durch die Membranfilterkerze 29 ausgebildete Filtermembran entsprechend der Pfeile 32 hindurch, so dass sich in einem Zwischenraum 33 innerhalb des Gehäuses 28 Filtrat sammeln kann, welches über eine Filterableitung 34 aus dem Membranfilter 27 ausgeleitet werden kann. Über 90 % der in einen Filterzulauf 35 eingeleiteten Flüssigkeit bzw. des Unfiltrats tritt an einem Filterablauf 36 aus den Kanälen 30 wieder aus, wobei hier der Filterablauf 36 durch eine Platte 37 ausgebildet ist, die in einem Abstand zu der Membranfilterkerze 29 angeordnet ist. Hierdurch wird ein Ringspalt 38 ausgebildet über den die Flüssigkeit bzw. das Unfiltrat aus dem Membranfilter 27 herausströmen kann. Insgesamt kann durch diese Tangentialflussfiltration ein Verstopfen der Kanäle 30 bzw. der Filtermembran der Membranfilterkerze 29 durch Partikel oder dergleichen weitestgehend verhindert werden, da durch den freien Filterablauf 36 das Unfiltrat mit einem hohen Volumenstrom die Kanäle 30 durchströmen und sich an der Filtermembran anlagernde Partikel mitführen kann.

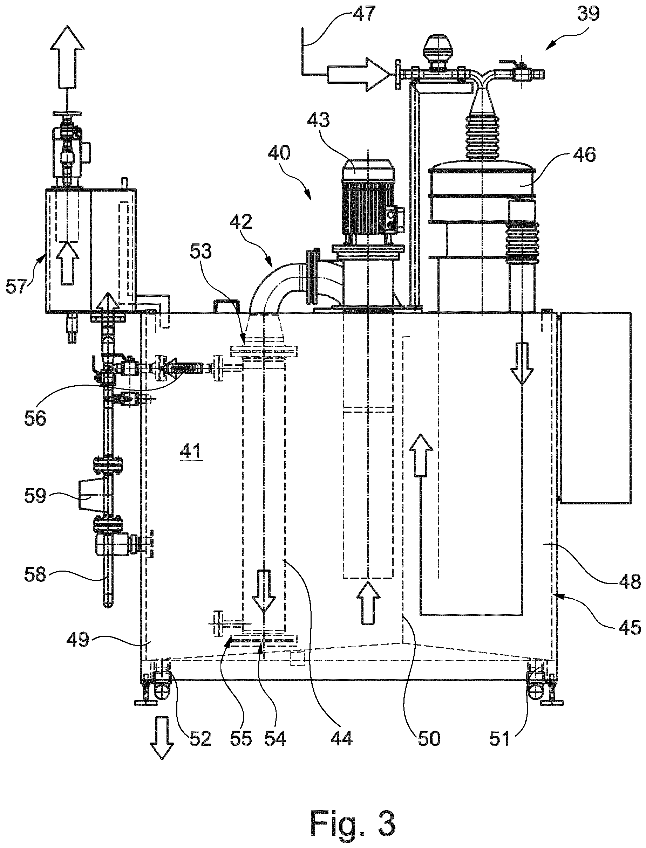

Die Fig. 3 zeigt eine Ausführungsform einer Reinigungseinheit 39 mit einer Membranfiltervorrichtung 40 zur Tangentialflussfiltration von Unfiltrat 41. Auch hier umfasst die Membranfiltervorrichtung 40 einen Flüssigkeitskreislauf 42 mit einer Pumpe 43, einen Membranfilter 44 und einen Flüssigkeitsbehälter 45. Weiter ist eine Schwingsiebvorrichtung 46 vorgesehen, die an eine Behälterzuleitung 47 angeschlossen ist und über die das Unfiltrat 41 in den Flüssigkeitsbehälter 45 gelangen kann. In dem Flüssigkeitsbehälter 45 ist ein erster Sumpf 48 und ein zweiter Sumpf 49 durch eine Wand 50 ausgebildet, so dass in dem ersten Sumpf 48 bereits im Unfiltrat 41 befindliche Partikel abgeschieden und über einen ersten Behälterablauf 51 ausgeleitet werden können. In dem zweiten Sumpf 49 ist ein zweiter Behälterablauf 52 angeschlossen. Die Pumpe 43 saugt nun Unfiltrat 41 aus dem Flüssigkeitsbehälter 45 bzw. dem zweiten Sumpf 49 an und fördert dieses zu einem Filterzulauf 53 des Membranfilters 44, wobei das Unfiltrat 41 an einem Filterablauf 54, welcher hier mit einem Ringspalt 55 ausgebildet ist, wieder in den zweiten Sumpf 49 austritt. Über eine Filterableitung 56 an dem Membranfilter 44 wird Filtrat zu einem Sammelbehälter 57 geleitet. In einer hier bogenförmig ausgebildeten Leitung 58 der Filterableitung 56 ist ein Volumenstromsensor 59 angeordnet. Über den Volumenstromsensor 59 lässt sich ein Volumenstrom des Filtrats bestimmen. Mittels einer hier nicht dargestellten Regeleinrichtung wird die Pumpe 43 nun nach dem mit dem Volumenstromsensor 59 detektierten Volumenstrom derart geregelt, dass eine Förderleistung der Pumpe 43 so angepasst wird, dass der gewünschte Volumenstrom an Filtrat erhalten wird.

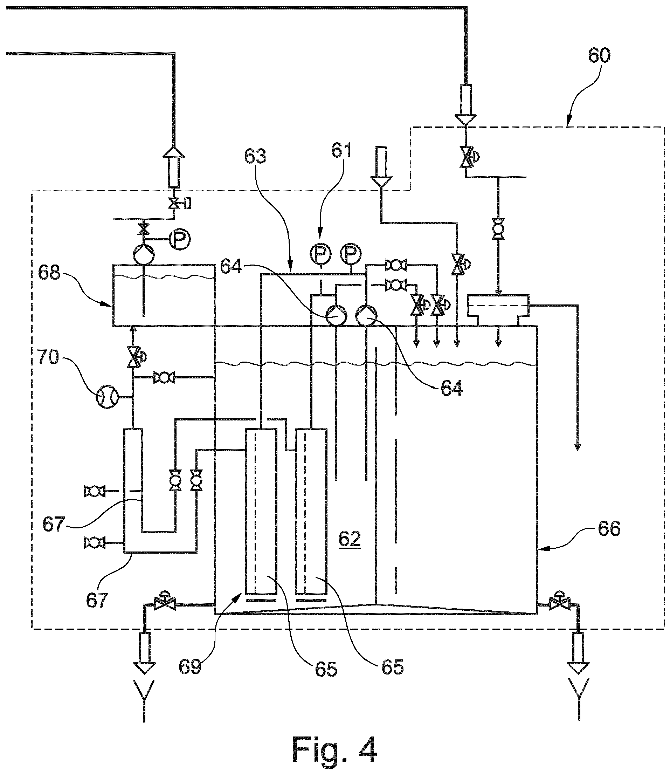

Die **Fig. 4** zeigt eine weitere Ausführungsform einer Reinigungseinheit 60 deren prinzipieller Aufbau im Wesentlichen dem der Reinigungseinheit aus **Fig. 3** entspricht. Die Reinigungseinheit 60 ist mit einer Membranfiltervorrichtung 61 zur Tangentialflussfiltration von Unfiltrat 62 ausgebildet. Die Membranfiltervorrichtung 61 weist einen Flüssigkeitskreislauf 63 mit zwei Pumpen 64 sowie zwei Membranfiltern 65 in einem Flüssigkeitsbehälter 66 auf. Jeder der Membranfilter weist eine Filterableitung 67 auf, über die Filtrat ausgeleitet und in einem Sammelbehälter 68 gespeichert werden kann. Die Pumpen 64 sowie die Membranfilter 65 sind parallel geschaltet, so dass eine große Menge an Unfiltrat 62 in dem Flüssigkeitskreislauf 63 zirkuliert werden und eine entsprechende Menge an Filtrat gewonnen werden kann. Die Membranfilter 65 sind mit einem offenen Filterablauf 69 ausgebildet, so dass diese im Wesentlichen drucklos betrieben werden können. Mittels eines Volumenstromsensors 70 kann eine Menge an Filtrat gemessen werden. Eine hier nicht dargestellte Regeleinrichtung der Reinigungseinheit 60 steuert die Pumpen 64 bzw. deren Förderleistung derart, dass eine gewünschte Menge an Filtrat gewonnen wird.

## Patentansprüche

1. Reinigungseinheit (10, 39, 60) zur Aufbereitung von Unfiltrat (12, 41, 62), Abwasser , Schmutzwasser, Reinigungsflüssigkeit, Schmutzlauge oder dergleichen, wobei die Reinigungseinheit eine Membranfiltervorrichtung (11, 40, 61) zur Tangentialflussfiltration von Unfiltrat aufweist, wobei die Membranfiltervorrichtung einen Flüssigkeitskreislauf (13, 42, 63), eine Pumpe (14, 43, 64) und zumindest einen Membranfilter (15, 27, 44, 65) umfasst, wobei die Pumpe und der Membranfilter in dem Flüssigkeitskreislauf angeordnet sind, wobei die Pumpe an einen Filterzulauf (16, 35, 53) des Membranfilters angeschlossen ist, wobei mittels der Pumpe Unfiltrat in dem Flüssigkeitskreislauf förderbar und durch den Membranfilter leitbar ist, wobei der Membranfilter eine Filterableitung (17, 34, 56, 67) aufweist, über die Filtrat aus dem Membranfilter leitbar ist,
**dadurch gekennzeichnet,**
**dass** die Membranfiltervorrichtung einen Flüssigkeitsbehälter (18, 45, 66) umfasst, der in dem Flüssigkeitskreislauf angeordnet ist, wobei mittels der Pumpe Unfiltrat aus dem Flüssigkeitsbehälter förderbar ist, wobei der Membranfilter mit einem Filterablauf (19, 36, 54, 69) in den Flüssigkeitsbehälter mündet, derart, dass über den Filterablauf Unfiltrat in den Flüssigkeitsbehälter einleitbar ist.

2. Reinigungseinheit nach Anspruch 1,
**dadurch gekennzeichnet,**
**dass** ein Durchflussquerschnitt des Filterablaufs (19, 36, 54, 69) zumindest so groß wie ein Durchflussquerschnitt des Membranfilters (15, 27, 44, 65) ausgebildet ist.

3. Reinigungseinheit nach Anspruch 1 oder 2,
**dadurch gekennzeichnet,**
**dass** der Filterablauf (19, 36, 54, 69) durch einen Ringspalt (21, 38, 55) ausgebildet ist.

4. Reinigungseinheit nach einem der vorangehenden Ansprüche,
**dadurch gekennzeichnet,**
**dass** der Filterablauf (19, 36, 54, 69) unterhalb eines Niveaus des Unfiltrats (12, 41, 62) in dem Flüssigkeitsbehälter angeordnet ist.

5. Reinigungseinheit nach einem der vorangehenden Ansprüche,
**dadurch gekennzeichnet,**
**dass** in der Filterableitung (17, 34, 56, 67) ein Volumenstromsensor (22, 59, 70) der Reinigungseinheit (10, 39, 60) angeordnet ist, mittels dem ein Volumenstrom des Filtrats messbar ist.

6. Reinigungseinheit nach einem der vorangehenden Ansprüche,
**dadurch gekennzeichnet,**
**dass** die Reinigungseinheit (10, 39, 60) eine Regeleinrichtung umfasst, mittels der eine Förderleistung der Pumpe (14, 43, 64) in Abhängigkeit eines Volumenstroms des Filtrats regelbar ist.

7. Reinigungseinheit nach Anspruch 6,
**dadurch gekennzeichnet,**
**dass** die Pumpe (14, 43, 64) einen Frequenzumrichter aufweist, der mittels der Regeleinrichtung ansteuerbar ist.

8. Reinigungseinheit nach einem der vorangehenden Ansprüche,
**dadurch gekennzeichnet,**
**dass** der Membranfilter (15, 27, 44, 65) mit zumindest einer keramischen Membranfilterkerze (29) ausgebildet ist.

9. Reinigungseinheit nach einem der vorangehenden Ansprüche,
**dadurch gekennzeichnet,**
**dass** der Membranfilter (15, 27, 44, 65) zur Filterung von Partikeln mit einer Größe von ≤ 100 µm ausgebildet ist.

10. Reinigungseinheit nach einem der vorangehenden Ansprüche,
**dadurch gekennzeichnet,**
**dass** die Reinigungseinheit (10, 39, 60) eine Schwingsiebvorrichtung (23, 46) zur Vorreinigung von Unfiltrat (12, 41, 62) umfasst, welche in einer Behälterzuleitung (24, 47) des Flüssigkeitsbehälters (18, 45, 66) angeordnet ist.

11. Reinigungseinheit nach Anspruch 10,
**dadurch gekennzeichnet,**
**dass** die Schwingsiebvorrichtung (23, 46) zur Filterung von Partikeln mit einer Größe von > 100 µm ausgebildet ist.

12. Reinigungseinheit nach einem der vorangehenden Ansprüche,
**dadurch gekennzeichnet,**
**dass** der Flüssigkeitsbehälter (18, 45, 66) zumindest einen Sumpf (48, 49) mit zumindest einem Behälterablauf (26, 51, 52) ausbildet.

13. Verfahren zur Aufbereitung von Unfiltrat (12, 41, 62), Abwasser, Schmutzwasser, Reinigungsflüssigkeit, Schmutzlauge oder dergleichen, mit einer Reinigungseinheit (10, 39, 60), wobei mit einer Membranfiltervorrichtung (11, 40, 61) der Reinigungseinheit eine Tangentialflussfiltration von Unfiltrat durchgeführt wird, wobei die Membranfiltervorrichtung einen Flüssigkeitskreislauf (13, 42, 63), eine Pumpe (14, 43, 64) und zumindest einen Membranfilter (15, 27, 44, 65) umfasst, wobei die Pumpe und der Membranfilter in dem Flüssigkeitskreislauf angeordnet sind, wobei die Pumpe an einen Filterzulauf (16, 35, 53) des Membranfilters angeschlossen ist, wobei mittels der Pumpe Unfiltrat in dem Flüssigkeitskreislauf gefördert und durch den Membranfilter geleitet wird, wobei der Membranfilter eine Filterableitung (17, 34, 56, 67) aufweist, über die Filtrat aus dem Membranfilter geleitet wird,
**dadurch gekennzeichnet,**
**dass** die Membranfiltervorrichtung einen Flüssigkeitsbehälter (18, 45, 66) umfasst, der in dem Flüssigkeitskreislauf angeordnet ist, wobei mittels der Pumpe Unfiltrat aus dem Flüssigkeitsbehälter gefördert wird, wobei der Membranfilter mit einem Filterablauf (19, 36, 54, 69) in den Flüssigkeitsbehälter mündet, wobei über den Filterablauf Unfiltrat in den Flüssigkeitsbehälter eingeleitet wird.

14. Verfahren nach Anspruch 13,
**dadurch gekennzeichnet,**
**dass** mittels der Pumpe (14, 43, 64) Unfiltrat (12, 41, 62) aus dem Flüssigkeitsbehälter angesaugt und an dem Filterzulauf (16, 35, 53) ein Druck von < 4 bar, bevorzugt ≤ 2 bar, besonders bevorzugt von ≤ 1bar, ausgebildet wird.

15. Verfahren nach Anspruch 13 oder 14,
**dadurch gekennzeichnet,**
**dass** mittels der Pumpe (14, 43, 64) zwischen dem Filterzulauf (16, 35, 53) und dem Filterablauf (19, 36, 54, 69) eine Druckdifferenz ≤ 1 bar ausgebildet wird.

16. Verfahren nach einem der Ansprüche 13 bis 15,
**dadurch gekennzeichnet,**
**dass** eine Regeleinrichtung einer Steuervorrichtung der Reinigungseinheit (10, 39, 60) eine Förderleistung der Pumpe (14, 43, 64) nach einem Volumenstrom des Filtrats regelt.

17. Verfahren nach Anspruch 16,
**dadurch gekennzeichnet,**
**dass** die Steuervorrichtung der Regeleinrichtung den Volumenstrom des Filtrats als eine Führungsgröße vorgibt.
